# EUROPÄISCHE PATENTSCHRIFT

(11) **EP 1 884 667 B1**
(45) Veröffentlichungstag und Bekanntmachung des Hinweises auf die Patenterteilung: **08.08.2018**
(21) Anmeldenummer: 07011933.4
(22) Anmeldetag: 19.06.2007
(51) Int. Cl.: F16B 31/02, F16B 39/22

(54) **Schraubenmutter**
Nut
Écrou

(30) Priorität: 03.08.2006 DE 102006037721
(43) Veröffentlichungstag der Anmeldung: 06.02.2008
(73) Patentinhaber: Pfisterer Kontaktsysteme GmbH, 73650 Winterbach (DE)
(72) Erfinder: Frank, Erich, 73269 Hochdorf (DE)
(74) Vertreter: Bartels und Partner, Patentanwälte

(56) Entgegenhaltungen:
- DE-A1- 1 944 805
- FR-A- 1 477 238
- GB-A- 207 560
- GB-A- 220 626
- GB-A- 1 004 672
- US-A1- 2001 018 014

## Beschreibung

Die Erfindung betrifft eine Schraubenmutter gemäß dem Oberbegriff des Anspruchs 1, insbesondere eine Abreißmutter, die nach dem Aufschrauben auf einen Gewindebolzen an einer vorgegebenen Trennstelle abreißen kann.

Aus der DE 1 944 805 ist eine Schraubenmutter bekannt, die zwei Abschnitte mit jeweils einem Innengewinde aufweist, wobei die beiden Abschnitte zusammen mit einem Schraubenmutterkopf einstückig ausgebildet sind. Sowohl zwischen den beiden Abschnitten als auch zwischen dem Schraubenmutterkopf und einem Abschnitt ist jeweils eine Trennstelle vorgesehen. Nach dem Aufschrauben der Schraubenmutter auf einen Gewindebolzen kommt der vom Schraubenmutterkopf entfernt angeordnete erste Abschnitt in Anlage an ein durch eine Gegenfläche gebildetes Widerlager, und bei einem Weiterdrehen der Schraubenmutter reißt der zweite Abschnitt an der Trennstelle von dem ersten Abschnitt ab. Bei einem Weiterdrehen des Schraubenmutterkopfes wird zunächst der zweite Abschnitt gegenüber dem ersten Abschnitt in der Art einer Kontermutter verspannt und bei einem weiteren Drehen des Schraubenmutterkopfes reißt der Schraubenmutterkopf von dem zweiten Abschnitt ab, sodass eine durch Kontern gesicherte Schraubenmutterverbindung auf dem Gewindebolzen zurückbleibt.

Durch das Abreißen des Schraubenmutterkopfes entsteht ein Überstand des Gewindebolzens über den ersten und gegebenenfalls auch über den zweiten Abschnitt hinaus, der nachträglich durch Absägen oder Abfeilen entfernt werden muss, wenn er beispielsweise aus anwendungstechnischen Gründen unerwünscht ist. Alternativ hierzu besteht die Möglichkeit, Gewindebolzen zu verwenden, die hinsichtlich ihrer Länge an den jeweiligen Anwendungsfall exakt angepasst sind. Dies erfordert allerdings die Bevorratung von Gewindebolzen unterschiedlicher Gewindelänge und das Mitführen von Gewindebolzen unterschiedlicher Länge an die Montagestelle.

Die GB 220 626 und die GB 207 560 offenbaren jeweils eine Schraubenmutter gemäß dem Oberbegriff von Anspruch 1 aufweisend einen ersten Abschnitt mit einem sich entlang einer ersten Längsachse erstreckenden ersten Innengewinde, und weiterhin aufweisend einen zweiten Abschnitt mit einem sich entlang einer zweiten Längsachse erstreckenden zweiten Innengewinde, wobei in einem Ausgangszustand der Schraubenmutter die erste Längsachse und die zweite Längsachse zu einer gemeinsamen Längsachse zusammenfallen und die Schraubenmutter auf einen Gewindebolzen aufschraubbar ist, bis der erste Abschnitt mit einer ersten Anlagefläche in Anlage an ein Widerlager kommt, und wobei die drehfeste Verbindung zwischen dem ersten Abschnitt und dem zweiten Abschnitt durch Überschreiten eines vorgebbaren Anzugsdrehmoments aufhebbar ist und bei einem Weiterdrehen durch eine Relativbewegung der zweite Abschnitt mit einer zweiten Anlagefläche in Anlage an einer dritten Anlagefläche des ersten Abschnitts oder an einer weiteren Anlagefläche eines weiteren Abschnitts der Schraubenmutter ist.

Weitere Schraubenmuttern gehen aus der GB 1 004 672, der US 2001/ 0018014 A1, der FR 1 477 238 und der DE 1 944 805 hervor.

Der Erfindung liegt daher die Aufgabe zugrunde, eine Schraubenmutter bereitzustellen, welche die Nachteile des Standes der Technik überwindet. In einer Ausführungsart soll die Sicherung der Schraubverbindung alternativ oder zusätzlich zu dem Kontermutterprinzip erhöht sein. In einer weiteren Ausführungsart soll im montierten Zustand ein Überstand des Gewindebolzens über den an dem Gewindebolzen verbleibenden Abschnitt der Schraubenmutter vermieden werden.

Diese Aufgabe ist durch die im Anspruch 1 bestimmte Schraubenmutter gelöst. Besondere Ausführungsarten der Erfindung sind in den Unteransprüchen bestimmt.

Gemäß dem Kennzeichen von Anspruch 1 ist vorgesehen, dass die zweite Anlagefläche des zweiten Abschnitts und die dritte Anlagefläche des ersten Abschnitts oder die weitere Anlagefläche des weiteren Abschnitts der Schraubenmutter geometrisch und die jeweiligen Abschnitte werkstoffmäßig derart aufeinander abgestimmt sind, dass bei einem Weiterdrehen des zweiten Abschnitts ein durch die auftretende Reibung auf den zweiten Abschnitt wirkendes Reibdrehmoment geringer ist als das für ein Abknicken oder Abreißen des Gewindebolzens erforderliche Drehmoment, so dass durch ein Weiterdrehen der Gewindebolzen abknickbar und/oder abreißbar ist, bevor es zu einer Bewegungskopplung des ersten Abschnitts an den zweiten Abschnitt kommt.

Bei Aufschrauben der Schraubenmutter auf den Gewindebolzen kommt zunächst der erste Abschnitt mit einer ersten Anlagefläche unmittelbar oder mittelbar über ein Zwischenelement, beispielsweise eine Unterlegscheibe, in Anlage an ein Widerlager, beispielsweise an einen durch Verschraubung zu klemmenden Gegenstand. Ein solches Aufschrauben kann auch von Hand erfolgen. Bei Überschreiten eines beispielsweise auf den zweiten Abschnitt wirkenden Drehmoments, beispielsweise unter Verwendung eines Werkzeuges, wird die drehfeste Verbindung aufgehoben, beispielsweise reißt im Fall einer einstückigen Ausbildung der zweite Abschnitt von dem ersten Abschnitt ab, oder eine reib- oder formschlüssige Verbindung zwischen dem ersten und zweiten Abschnitt wird aufgehoben.

Durch ein Weiterdrehen des zweiten Abschnitts gegenüber dem ersten Abschnitt kommt eine zweite Anlagefläche des zweiten Abschnitts in Anlage an eine dritte Anlagefläche des ersten Abschnitts oder an eine weitere Anlagefläche eines weiteren Abschnitts der Schraubenmutter, sofern zum Zeitpunkt des Abreißens zwischen der zweiten Anlagefläche des zweiten Abschnitts und der dritten Anlagefläche des ersten Abschnitts oder der weiteren Anlagefläche des weiteren Abschnitts ein Spalt existiert; sofern an dieser Stelle kein Spalt existiert, ist die zweite Anlagefläche des zweiten Abschnitts zum Zeitpunkt des Abreißens bereits in Anlage an der dritten Anlagefläche des ersten Abschnitts oder an der weiteren Anlagefläche des weiteren Abschnitts.

Das bei einem Weiterdrehen auf den zweiten Abschnitt wirkende Reibdrehmoment, das durch den Reibungskoeffizienten zwischen den in Anlage befindlichen Anlageflächen und durch den effektiven Reibradius bestimmt ist, ist kleiner als das für ein Abknicken oder Abreißen des Gewindebolzens erforderliche Drehmoment. Ein Abknicken kann insbesondere erfolgen, wenn mindestens eine Anlagefläche mit der im Ausgangszustand der Schraubenmutter gemeinsamen Längsachse der Innengewinde des ersten und zweiten Abschnitts einen Winkel von weniger als 90° einschließt.

In einer Ausführungsart ist das durch ein Weiterdrehen auf den ersten Abschnitt eingeleitete Drehmoment kleiner als das auf den ersten Abschnitt durch die Anlage an dem Widerlager wirkende Reibdrehmoment, das wiederum größer ist als das für ein Abknicken oder Abreißen des Gewindebolzens erforderliche Drehmoment. Dadurch ist verhindert, dass es zu einer Bewegungskopplung zwischen dem ersten Abschnitt und dem zweiten Abschnitt kommt; bevor das für ein Drehen des ersten Abschnitts erforderliche Drehmoment erreicht wird, knickt oder reißt der Gewindebolzen ab. Das Anzugsdrehmoment für den ersten Abschnitt ist daher durch jenes Drehmoment bestimmt, bei dessen Erreichen die drehfeste Verbindung zwischen dem ersten Abschnitt und dem zweiten Abschnitt aufgehoben wird.

Auf diese Weise ist es möglich, den Gewindebolzen definiert im Bereich eines Übergangs zwischen dem ersten und zweiten Abschnitt abzuknicken oder abzureißen, jedenfalls nicht im Bereich der Anlage des ersten Abschnitts an dem Widerlager. Bei einer üblichen Kontermutter liegen diesbezüglich unbestimmte Kräfteverhältnisse vor, insbesondere kann bei einem Weiterdrehen der dem zweiten Abschnitt entsprechenden Kontermutter die dem ersten Abschnitt entsprechende Sicherungsmutter mitgedreht werden, und es käme dann zu einem Abreißen des Gewindebolzens am Übergang zwischen der Sicherungsmutter und dem Widerlager, was unerwünscht ist, weil dadurch die Schraubverbindung aufgehoben wäre.

In einer Ausführungsart ist der den Reibradius bestimmende mittlere Radius der ersten Anlagefläche des ersten Abschnitts größer als der mittlere Radius der zweiten Anlagefläche des zweiten Abschnitts.

In einer Ausführungsart sind der erste und zweite Abschnitt oder der erste und der die weitere Anlagefläche ausbildende Abschnitt einstückig ausgebildet. In einem alternativen Ausführungsbeispiel ist der die weitere Anlagefläche ausbildende Abschnitt als separates Element ausgebildet, beispielsweise ist der die weitere Anlagefläche ausbildende Abschnitt von einem Aufnahmekörper gebildet, der den ersten Abschnitt aufnimmt, oder von einem Einlegeelement, etwa einer Unterlegscheibe.

In einer Ausführungsart, insbesondere im Fall einer einstückigen Ausbildung der Schraubenmutter, sind die zweite Anlagefläche des zweiten Abschnitts und die weitere Anlagefläche durch einen Einschnitt gebildet, der eine Trennstelle vorgibt und dessen Position und/oder Abmessung das für ein Aufheben der drehfesten Verbindung zwischen erstem und zweitem Abschnitt erforderliche Drehmoment bestimmt.

In einer Ausführungsart weist der erste und/oder zweite Abschnitt der Schraubenmutter jeweils eine Angriffsfläche für ein Standardwerkzeug auf, beispielsweise einen Außensechskant für einen Maul- oder Ringschlüssel.

Nach einem Abreißen der Schraubenmutter bilden der erste Abschnitt und der zweite Abschnitt separat betätigbare Teile der Schraubenmutter. Weil das Innengewinde der Schraubenmutter durchgängig angeformt ist, insbesondere durchgängig durch den ersten und zweiten Abschnitt angeformt ist, verbleibt der abgerissene zweite Abschnitt der Schraubenmutter auch nach dem Abreißen auf dem Gewindebolzen. Dieser abgerissene zweite Abschnitt kann einer Ausführungsart, in der das Abreißen der Schraubenmutter vor dem Abreißen des Gewindebolzens erfolgt, in der Art einer Kontermutter gegenüber dem ersten Abschnitt weiter angezogen werden.

In einer Ausführungsart sind der erste und zweite Abschnitt als separate Teile ausgebildet und im Ausgangszustand der Schraubenmutter durch Formschluss oder Reibschluss drehfest miteinander verbunden. Besonders vorteilhaft ist dabei, wenn der erste oder zweite Abschnitt durch eine Standardmutter gebildet ist. In einer Ausführungsart ist der Form- und/oder Reibschluss durch eine entsprechende Verbindung des ersten Abschnitts mit dem zweiten Abschnitt unmittelbar gebildet, beispielsweise durch eine Verschraubung, Verstiftung oder Verklemmung des ersten und zweiten Abschnitts. Alternativ hierzu kann für den Form- oder Reibschluss auch ein separater Verbindungsabschnitt oder ein separates Verbindungselement vorgesehen sein, beispielsweise ein Verbindungselement, das Aufnahmeöffnungen für eine im Ausgangszustand drehfeste form- und/oder reibschlüssige Aufnahme des ersten und/oder zweiten Abschnitts der Schraubenmutter aufweist. Die Trennstelle kann in diesem Fall durch einen Einschnitt in den Verbindungsabschnitt gebildet sein.

In einer Ausführungsart ist eine an die Trennstelle angrenzende Fläche eines Abschnitts der Schraubenmutter mindestens bereichsweise plan, wobei die plane Fläche mit der gemeinsamen Längsachse einen Winkel von weniger als 90° einschließt. Infolge einer Relativbewegung der beiden ein Innengewinde aufweisenden Abschnitte nach Aufhebung der drehfesten Verbindung wird der in diese Abschnitte eingeschraubte Gewindebolzen abgeknickt, wodurch eine zusätzliche Sicherung der Schraubverbindung erfolgt. Um die Schraubverbindung zu lösen, müsste der Gewindebolzen wieder zurückgebogen werden, was nur mit erheblichem Kraftaufwand möglich ist und insbesondere nicht unbeabsichtigt oder unerwünscht durch Maschinenvibrationen oder dergleichen erfolgen kann.

Bei entsprechender geometrischer Ausgestaltung der Trennstelle, insbesondere bei entsprechend großer Tiefe oder Breite eines die Trennstelle bildenden Einschnitts in die Schraubenmutter, können zunächst der erste und zweite Abschnitt der Schraubenmutter an der Trennstelle voneinander abreißen und bei einem Weiterdrehen auch der Schraubenbolzen abgerissen werden. Anders als bei einem rechtwinklig zur Achse der Gewindebohrung vorgesehenen, die Sollbruchstelle bildenden Einschnitt, wird der abgerissene Teil der Schraubenmutter nicht einfach als Kontermutter eingesetzt. Vielmehr kommt es durch die Schrägstellung der an die Trennstelle angrenzenden Fläche mindestens eines der Abschnitte beim Weiterdrehen der Schraubenmutter zunächst zu einem Schließen des sich durch das Abreißen gebildeten Spaltes, und dabei zu einem Abknicken der beiden Abschnitte der Schraubenmutter zueinander. Durch das gleichfalls erfolgende Abknicken des Gewindebolzens bei gleichzeitigem Aufbringen axialer Zugspannung in den Gewindebolzen wird der Gewindebolzen einseitig belastet, was die Zugfestigkeit des Gewindebolzens reduziert und dadurch ermöglicht, den Gewindebolzen an der Trennstelle mit einem verhältnismäßig geringen Drehmoment abzureißen.

Durch das Abreißen des Gewindebolzens an der durch die Gestaltung der Schraubenmutter vorgebbaren Position ist es möglich, Gewindebolzen mit einer Standardlänge einzusetzen und es entfällt das Erfordernis, eine größere Anzahl von Gewindebolzen mit unterschiedlicher Länge vorzuhalten und auf die Montagestelle mitzuführen. Durch das Abreißen des Gewindebolzens an der Trennstelle der Schraubenmutter ist gewährleistet, dass die Schraubverbindung keinen oder jedenfalls keinen wesentlichen Überstand des Gewindebolzens über die Schraubenmutter aufweist. Dies ist beispielsweise bei Schraubklemmverbindungen in der Elektrotechnik, insbesondere der Energieversorgungstechnik, von besonderem Vorteil, bei denen ein Überstand des Gewindebolzens nicht akzeptabel ist, beispielsweise weil der zur Verfügung stehende Platz dies nicht zulässt, weil eine Verletzungsgefahr besteht und/oder weil die Schraubklemme nach ihrem Verschrauben in eine Kunststoffmuffe eingegossen wird.

Besonders vorteilhaft ist, dass sowohl das Abreißen der beiden Abschnitte der Schraubenmutter voneinander als auch das Abreißen des Gewindebolzens nicht ruckartig erfolgt, sondern über einen weiten Bereich mit nahezu konstantem Drehmoment. Dies verhindert ein unkontrolliertes Abschleudern der abgerissenen Teile und das damit verbundene Verletzungsrisiko für den Monteur. Vorteilhaft ist außerdem, dass das Erreichen des vorgebbaren Nenndrehmoments für den Monteur an der Trennstelle visuell kontrollierbar ist und insbesondere erkennbar und prüfbar ist, ob ein das Abreißen auslösende Anziehdrehmoment erreicht ist. Vorteilhaft ist außerdem, dass dieses Anziehdrehmoment durch ein unmittelbar an das Abreißen folgendes Weiterdrehen der Schraubenmutter nicht oder jedenfalls nicht wesentlich überschritten wird. Sowohl ein zu geringes als auch ein zu starkes Anziehen der Schraubenmutter ist dadurch wirksam verhindert.

In einer Ausführungsart der Erfindung ist die Reibung, die sich infolge der Relativbewegung der an die Trennstelle angrenzenden Abschnitte ergibt, wahlweise reduziert oder erhöht. Dies kann beispielsweise dadurch realisiert sein, dass mindestens eine an die Trennstelle angrenzende Fläche eines Abschnitts der Schraubenmutter eine Beschichtung mit einem Werkstoff aufweist, der einen von dem Werkstoff des Abschnitts abweichenden Reibungskoeffizienten aufweist. Beispielsweise kann eine Zinkschicht oder ein anderes Gleitmittel aufgebracht sein, welches die Reibung an der an die Trennstelle angrenzenden Fläche reduziert. Ein entsprechendes Gleitmittel kann auch im Bereich des Innengewindes vorgesehen sein, um die Reibung im Gewinde zu reduzieren.

In einer Ausführungsart sind die an die Trennstelle angrenzenden Flächen der Abschnitte der Schraubenmutter geometrisch und/oder topologisch so geformt, dass der sich beim Aufschrauben und Festziehen der Schraubenmutter auf den Gewindebolzen und/oder bei der Relativbewegung zwischen den beiden jeweils ein Innengewinde aufweisenden Abschnitten der Schraubenmutter, und damit beim Abreißen des Überstandes des Gewindebolzens, ergebende effektive Reibradius optimiert ist. Alternativ oder ergänzend kann auch ein Einlegeteil zum Einlegen an der Trennstelle der Schraubenmutter vorgesehen sein, beispielsweise eine Unterlegscheibe, eine Spannscheibe oder eine Stützscheibe, durch die das Reibverhalten der beiden gegeneinander zu verdrehenden Abschnitte der Schraubenmutter optimiert werden kann.

Betreffend das Abreißen des Gewindebolzens kann die Schrägstellung, Tiefe und/oder Breite des die Trennstelle bildenden Spaltes optimiert werden. So führen Winkel zwischen der gemeinsamen Längsachse der Schraubenmutter im Ausgangszustand und der an die Trennstelle angrenzenden planen Fläche oder eines Einschnitts von weniger als 85° zu einer Herabsetzung des für das Abknicken und Abreißen des Gewindebolzens erforderlichen Drehmoments.

In einem Ausführungsbeispiel ist die Länge des Innengewindes im ersten und zweiten Abschnitt der Schraubenmutter größer als das 0,6-fache, insbesondere größer als das 0,8-fache, des Durchmessers des Gewindebolzens. Für viele Anwendungen ist es vorteilhaft, die Gewindelänge möglichst groß zu wählen.

In einer Ausführungsart ist in dem Gewindebolzen in axialer Richtung eine Bohrung eingebracht. Dadurch ist das Abreißverhalten des überstehenden Teils des Gewindebolzens weiter verbessert. Der Durchmesser der eingebrachten Innenbohrung beeinflusst das Abreißverhalten in Folge der durch das Abknicken entstehenden einseitigen Belastung.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines ersten Ausführungsbeispiels einer erfindungsgemäßen Schraubenmutter;
- Fig. 2: zeigt eine Seitenansicht der Schraubenmutter der Fig. 1;
- Fig. 3: zeigt eine Draufsicht auf die Schraubenmutter 1 der Fig. 1;
- Fig. 4: zeigt einen Querschnitt durch die Schraubenmutter der Fig. 1;
- Fig. 5: zeigt eine Seitenansicht eines zweiten Ausführungsbeispiels;
- Fig. 6: zeigt einen Querschnitt durch ein drittes Ausführungsbeispiel;
- Fig. 7: zeigt einen Querschnitt durch ein viertes Ausführungsbeispiel;
- Fig. 8: zeigt ein fünftes Ausführungsbeispiel einer Schraubenmutter;
- Fig. 9: zeigt ein sechstes Ausführungsbeispiel einer Schraubenmutter;
- Fig. 10: zeigt ein siebtes Ausführungsbeispiel einer Schraubenmutter; und
- Fig. 11: zeigt ein achtes Ausführungsbeispiel einer Schraubenmutter.

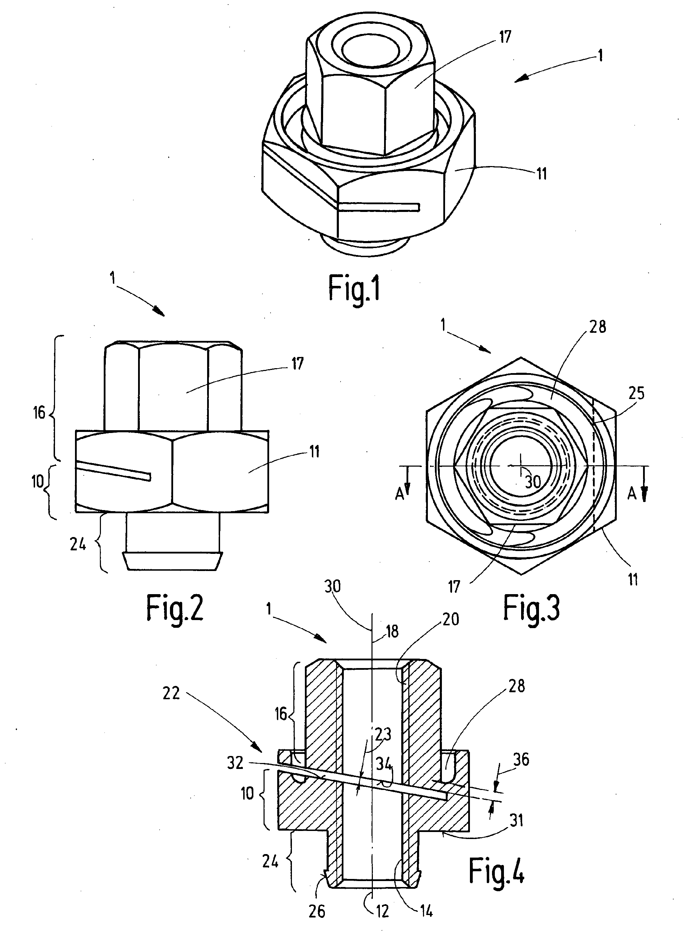

Die Fig. 1 zeigt eine perspektivische Ansicht eines ersten Ausführungsbeispiels einer erfindungsgemäßen Schraubenmutter 1. Die Fig. 2 zeigt eine Seitenansicht der Schraubenmutter 1 der Fig. 1. Die Fig. 3 zeigt eine Draufsicht auf die Schraubenmutter 1 der Fig. 1. Die Fig. 4 zeigt einen Querschnitt durch die Schraubenmutter 1 der Fig. 1 entlang der Schnittlinie A-A in Fig. 3.

Die Schraubenmutter 1 weist einen ersten Abschnitt 10 mit einem sich entlang einer ersten Längsachse 12 erstreckenden ersten Innengewinde 14 auf. Außerdem weist die Schraubenmutter 1 einen zweiten Abschnitt 16 mit einem sich entlang einer zweiten Längsachse 18 erstreckenden zweiten Innengewinde 20 auf. In dem in den Fig. 1 bis 3 dargestellten Ausgangszustand der Schraubenmutter 1 sind der erste Abschnitt 10 und der zweite Abschnitt 16 einstückig ausgebildet und die erste Längsachse 12 und die zweite Längsachse 18 fallen zu einer gemeinsamen Längsachse 30 zusammen. In diesem Zustand ist die Schraubenmutter 1 auf einen nicht dargestellten Gewindebolzen aufschraubbar, so dass der Gewindebolzen sowohl in das erste Innengewinde 14 als auch in das daran anschließende zweite Innengewinde 20 eingeschraubt ist, bei denen es sich beispielsweise um jeweils metrische M8 oder um ein M6 Gewinde handelt.

Im Bereich des ersten Abschnitts 10 weist die Schraubenmutter 1 einen Einschnitt 22 auf, der so tief ist, dass er die Bohrung für das erste Innengewinde 14 vollständig durchdringt. In radialer Richtung durchdringt der Einschnitt 22 mehr als 75%, vorzugsweise mehr als 85%, insbesondere etwa 90% der Erstreckung des ersten Abschnitts, wie dies durch die gestrichelte Linie 25 in Fig. 3 dargestellt ist. Die Breite 23 des Einschnitts 22 beträgt zwischen 0,5 und 2 mm, insbesondere etwa 0,8 mm. Der Einschnitt 22 ist plan und bildet die plane zweite Anlagefläche 34 des zweiten Abschnitts 16 und die hierzu planparallele dritte Anlagefläche 32 des ersten Abschnitts 10, die mit der gemeinsamen Längsachse 30 einen Winkel von weniger als 90° einschließen, im Ausführungsbeispiel etwa 80°.

Sowohl der erste Abschnitt 10 als auch der zweite Abschnitt 16 weisen auf ihrer Außenumfangsfläche eine Werkzeugangriffsfläche 11 bzw. 17 auf, im dargestellten Ausführungsbeispiel jeweils einen Außensechskant. Die planen Werkzeugangriffsflächen 11, 17 des ersten und zweiten Abschnittes 10, 16 sind dabei zueinander winkelversetzt, im dargestellten Ausführungsbeispiel um etwa 30°. Der Außendurchmesser der Werkzeugangriffsfläche 11 des ersten Abschnitts 10 ist dabei größer als der Außendurchmesser der Werkzeugangriffsfläche 17 des zweiten Abschnitts 16. Die beiden Abschnitte 10, 16 sind achsensymmetrisch bezüglich der ersten bzw. zweiten Längsachse 12, 18 ausgebildet.

An den ersten Abschnitt 10 schließt auf der dem zweiten Abschnitt 16 gegenüberliegenden Seite ein dritter Abschnitt 24 an, mittels dem die Schraubenmutter 1 mit einer zu verschraubenden Einrichtung verliersicher verbindbar ist, insbesondere federkraftverrastend festlegbar ist. Im Ausführungsbeispiel bildet der rohrstutzenartig ausgebildete dritte Abschnitt 24 an oder nahe seinem dem ersten Abschnitt 10 abgewandten Ende Verhakungselemente 26 aus, im Ausführungsbeispiel einen im Querschnitt (Fig. 4) sägezahnförmigen Vorsprung. Damit kann die Schraubenmutter 1 beispielsweise in die Öffnung einer Gehäusewand eingesteckt werden oder in eine Bohrung, die einen Hinterschnitt aufweist. Im Ausführungsbeispiel sind der erste, zweite und dritte Abschnitt 10, 16, 24 einstückig ausgebildet.

Im Bereich des Übergangs zwischen dem ersten Abschnitt 10 und dem zweiten Abschnitt 16 weist der zweite Abschnitt 16 eine um die Längsachse 18 vorzugsweise konzentrisch umlaufende Rille 28 auf. Die Breite der Rille 28 beträgt etwa die Hälfte des radialen Überstandes des ersten Abschnitts 10 gegenüber dem zweiten Abschnitt 16. Die Tiefe der Rille ist in Anpassung an die Position und Geometrie des Einschnitts 22 so gewählt, dass der dadurch gebildete Verbindungsabschnitt 36 eine Dicke aufweist, durch die das Abreißdrehmoment der Schraubenmutter 1 bestimmt ist. In einer Ausführungsart beträgt die maximale Dicke des Verbindungsabschnitts 36 zwischen 0,2 und 1 mm, insbesondere zwischen 0,35 und 0,7 mm und vorzugsweise zwischen 0,4 und 0,5 mm.

Der Einschnitt 22 und die Rille 28 definieren die Trennstelle oder Sollbruchstelle für die Schraubenmutter 1, weil an der Stelle des Verbindungsabschnitts 36 der zweite Abschnitt 16 vom ersten Abschnitt 10 abreißt. Vorteilhaft ist dabei, dass der Verbindungsabschnitt 36 beabstandet ist von der zweiten Anlagefläche 34 des zweiten Abschnitts 16 und der dritten Anlagefläche 32 des ersten Abschnitts 10, weil dadurch ein sich beim Abreißen in der Regel ergebender Materialüberstand nicht zu einer Erhöhung des Reibdrehmomentes führt, das auf den zweiten Abschnitt 16 beim Weiterdrehen des zweiten Abschnitts 16 gegenüber dem ersten Abschnitt 10 wirkt.

Das Aufschrauben der Schraubenmutter 1 auf einen Gewindebolzen kann zunächst von Hand oder wahlweise mit einem Werkzeug unter Verwendung der Werkzeugangriffsflächen 11, 17 des ersten Abschnitts 10 oder des zweiten Abschnitts 16 erfolgen, bis die Schraubenmutter 1 mit der ersten Anlagefläche 50 des ersten Abschnitts 10 in Anlage an ein Widerlager kommt, beispielsweise an eine Anlagefläche eines mit der Schraubverbindung zu verbindenden Gegenstandes. Ein festes Anziehen der Schraubenmutter 1 erfolgt mittels eines Werkzeugs, das an der Werkzeugangriffsfläche 17 des zweiten Abschnitts 16 angreift. Bei Überschreiten eines durch den Einschnitt 22 und die Rille 16 vorgegebenen Drehmomentes kommt es zunächst zu einer Aufhebung der drehfesten Verbindung zwischen dem ersten Abschnitt 10 und dem zweiten Abschnitt 16 durch Abreißen im Bereich des Verbindungsabschnitts 36.

Bei einem Weiterdrehen kommt es zu einer Relativbewegung des zweiten Abschnitts 16 gegenüber dem ersten Abschnitt 10. In einer Auführungsart kann der zweite Abschnitt in der Art einer Kontermutter auf den ersten Abschnitt 10 aufgedreht werden und diesen verklemmen und dadurch sichern, insbesondere wenn die Ausrichtung des Einschnitts 22 im Wesentlichen rechtwinklig in Bezug auf die erste Längsachse 12 ist.

In einer Ausführungsart kommt es nach einer Aufhebung der drehfesten Verbindung zwischen dem ersten Abschnitt 10 und dem zweiten Abschnitt 16 bei einem Weiterdrehen des zweiten Abschnitts 16 aufgrund der Schrägstellung des Einschnitts 22 in Bezug auf die Längsachse 12 zu einem Abknicken der zweiten Längsachse 18 und damit auch zu einem Abknicken des Gewindebolzens. Dadurch ist eine zusätzliche Schraubensicherung gewährleistet. Um den ersten Abschnitt 10 der Schraubenmutter 1 zu lösen, müsste der Gewindebolzen erst wieder zurückgebogen werden, was nicht ohne erheblichen Kraftaufwand möglich ist.

Bei einem weiteren Drehen des zweiten Abschnitts 16 kann der Gewindebolzen sogar abgerissen werden, insbesondere an einer der durch den Einschnitt 22 vorgegebenen Stelle nahe dem Ende des abgerissenen Teils des ersten Abschnitts 10 der Schraubenmutter 1. Dies führt dazu, dass der abgerissene Gewindebolzen nicht oder jedenfalls nicht wesentlich über den ersten Abschnitt 10 der Schraubenmutter 1 übersteht, was für viele Anwendungen wesentlich und besonders vorteilhaft ist. Der Gewindebolzen wird an der Abreißstelle abgeknickt, abhängig vom Neigungswinkel, der Tiefe und Breite der Sollbruchstelle bzw. des Einschnitts 22 und abhängig vom Drehwinkel der beiden Abschnitte 10, 16. Zu Beginn des Weiterdrehen trifft zunächst der tiefste Punkt des abgerissenen Teils punktuell oder entlang einer Linie oder Fläche auf die schiefe Ebene des ersten Abschnitts 10, da die durch den Einschnitt 22 vorgegebene Schlitzbreite durch die Drehbewegung des zweiten Abschnitts 16 zunächst zurückgelegt werden muss, um die beiden durch den Einschnitt 22 gebildeten schiefen Planflächen 32, 34 aufeinander gleiten zu lassen und damit das vollständige Abknicken des Gewindebolzens zu erreichen. Dadurch, dass der erste Abschnitt 10 eine Werkzeugangriffsfläche 11 aufweist, ist es möglich, nach einem Abreißen des Gewindebolzens die Schraubverbindung zu lösen. Für Anwendungsfälle, in denen ein solches nachträgliches Lösen nicht möglich sein soll, kann der erste Abschnitt 10 ohne Werkzeugfläche ausgebildet sein, beispielsweise auf seiner Außenfläche kreiszylindrisch gebildet sein.

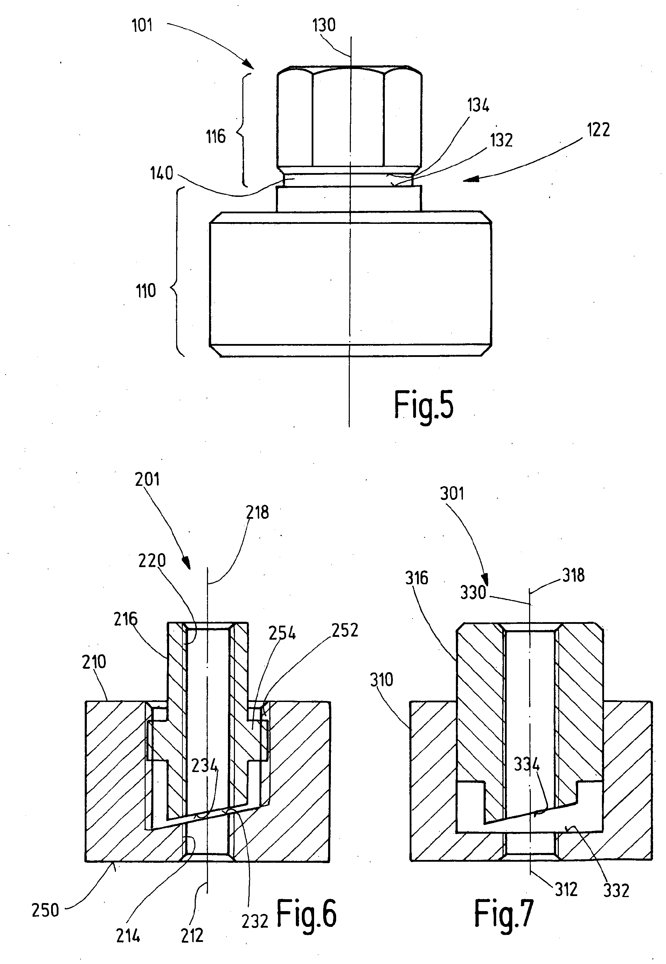

Die Fig. 5 zeigt eine Seitenansicht eines zweiten Ausführungsbeispiels einer Schraubenmutter 101. Der Einschnitt 122 ist dabei in dem zweiten Abschnitt 116 eingebracht und schließt mit der gemeinsamen Längsachse 130 einen Winkel von etwa 90° ein. Nach einem Abreißen des zweiten Abschnitts 116 gegenüber dem ersten Abschnitt 110 kann der zweite Abschnitt 116 als Kontermutter zur Sicherung des ersten Abschnitts 110 weiter angezogen werden. Die an die durch den Einschnitt 122 gebildete Trennstelle angrenzenden Flächen 132, 134 können dabei an der Oberfläche werkstoffmäßig oder geometrisch so ausgebildet sein, dass günstige Bedingungen sowohl für das Festziehen der Schraubenmutter 101 als auch für ein Verdrehen der Abschnitte 110, 116 zueinander und damit für ein Abreißen des Gewindebolzens gewährleistet sind.

Alternativ oder ergänzend kann - wie im Ausführungsbeispiel - an der durch den Einschnitt 122 gebildeten Trennstelle auch eine Scheibe 140 eingelegt sein, durch die insbesondere die Reibung nach dem Abreißen der Schraubenmutter 101 beeinflusst werden kann. So kann beispielsweise ein durch eine beschichtete, insbesondere verzinnte Unterlegscheibe gebildeter Druckring die Reibung in der abgerissenen Schraubenmutter 101 reduzieren, was vorteilhaft hinsichtlich des Abreißens des Gewindebolzens ist. Dagegen erhöht eine Sicherungsscheibe die Reibung, was wiederum vorteilhaft im Hinblick auf die Sicherung der Schraubverbindung ist.

Grundsätzlich gilt, dass die Kopfreibung einer Schraube oder Schraubenmutter abhängig vom Reibradius ist, wobei sich der Reibradius berechnet aus dem vierten Teil der aus dem Kopfdurchmesser und dem Bohrungsdurchmesser gebildeten Summe. Dadurch, dass der Kopfdurchmesser des ersten Abschnitts 110 größer ist als der Kopfdurchmesser des zweiten Abschnitts 116, ist die Kopfreibung beim zweiten Abschnitt 116 kleiner und damit die Schraubkraft größer, weil der Bohrungsdurchmesser in beiden Abschnitten 110, 116 übereinstimmend ist. Die Schraube oder Mutter bricht demnach an der Stelle, an der die Kopfauflage kleiner ist.

Die Fig. 6 zeigt einen Querschnitt durch ein drittes Ausführungsbeispiel einer erfindungsgemäßen Schraubenmutter 201. Der erste Abschnitt 210 und der zweite Abschnitt 216 sind dabei als separate Teile ausgebildet, wobei der erste Abschnitt 210 wiederum den auf dem Gewindebolzen verbleibenden Teil der Schraubenmutter 201 bildet und an seinem dem zweiten Abschnitt 216 wegweisenden Ende eine plane erste Anlagefläche 250 ausbildet. Entlang der ersten Längsachse 212 weist der erste Abschnitt 210 eine Bohrung mit einem ersten Innengewinde 214 auf. Die Bohrung weitet sich in Richtung auf den zweiten Abschnitt 216 auf, wobei der Übergang die ringförmige dritte Anlagefläche 232 des ersten Abschnitts 210 bildet und mit der ersten Längsachse 212 einen Winkel von weniger als 90° einschließt.

Im aufgeweiteten Bereich der Bohrung ist ein weiteres Innengewinde 252 vorgesehen, in welches der zweite Abschnitt 216 einschraubbar ist. Hierzu kann der zweite Abschnitt 216 auf seiner Außenumfangsfläche ein mit dem weiteren Innengewinde 252 zusammenwirkendes Außengewinde aufweisen. Vorzugsweise ist das Außengewinde am Umfang einer ringförmigen Verdickung 254 angebracht, die von dem zweiten Abschnitt 216 einstückig ausgebildet ist und von dem Ende des zweiten Abschnitts 216, das dem ersten Abschnitt 210 zugewandt ist, axial zurückversetzt ist. Die stirnseitige Endfläche des zweiten Abschnitts 216 bildet die an die Trennstelle angrenzende zweite Anlagefläche 234 des zweiten Abschnitts 216, die im dargestellten Ausgangszustand parallel zur dritten Anlagefläche 232 des ersten Abschnitts 210 ist.

Die dritte Anlagefläche 232 des ersten Abschnitts 210 und/oder die zweite Anlagefläche 234 des zweiten Abschnitts 216 kann abweichend von der Darstellung in Fig. 6 auch rechtwinklig zur ersten Längsachse 212 des ersten Abschnitts 210 bzw. zur zweiten Längsachse 218 des zweiten Abschnitts 216 ausgerichtet sein. Dadurch kann die Herstellung vereinfacht werden.

In Übereinstimmung mit den bisher gezeigten Ausführungsbeispielen weist der zweite Abschnitt 216 wiederum eine Bohrung mit einem zweiten Innengewinde 220 entlang der zweiten Längsachse 218 auf, d.h. das zweite Innengewinde 220 verläuft konzentrisch zur zweiten Längsachse 218. In dem auf den Gewindebolzen aufgeschraubten Zustand führt eine RelativDrehbewegung zwischen dem zweiten Abschnitt 216 und dem ersten Abschnitt 210 zu einem Abknicken des zweiten Abschnitts 216 gegenüber dem ersten Abschnitt 210, sobald die zweite Anlagefläche 234 des zweiten Abschnitts 216 in Anlage an die dritte Anlagefläche 232 des ersten Abschnitts 210 kommt.

Die beiden Abschnitte 210, 216 werden separat hergestellt und anschließend verschraubt. Durch die Länge und Ausführung des weiteren Innengewindes 252 kann das Drehmoment eingestellt werden, bei dem die drehfeste Verbindung der beiden Abschnitte 210, 216 aufgehoben ist, was einem Abreißen der in den Fig. 1 bis 5 dargestellten ersten und zweiten Ausführungsbeispiele entspricht. Ein Vorteil dieser Ausführungsart ist, dass nach der Aufhebung der drehfesten Verbindung zwischen dem ersten und zweiten Abschnitt 210, 216 keine Teile abbrechen und herunterfallen. Ein weiterer Vorteil besteht darin, dass die beiden Abschnitte 210, 216 als Einzelteile hergestellt werden können.

Die Fig. 7 zeigt einen Querschnitt durch ein viertes Ausführungsbeispiel einer erfindungsgemäßen Schraubenmutter 301. Der erste Abschnitt 310 kann ähnlich aufgebaut sein wie der erste Abschnitt 210 des in der Fig. 5 dargestellten Ausführungsbeispiels. Im Unterschied dazu ist die drehfeste Verbindung im Ausgangszustand der Schraubenmutter 301 durch einen Form- oder Reibschluss des zweiten Abschnitts 316 realisiert. Dies kann beispielsweise durch eine Presspassung beim Einstecken des zweiten Abschnitts 316 in den ersten Abschnitt 310 erfolgen, durch ein Verkeilen, Verstiften oder dergleichen. Durch den Reib- oder Formschluss ist das Nenndrehmoment vorgegeben, bei dessen Überschreiten es zu einer Relativbewegung des zweiten Abschnitts 316 gegenüber dem in Bezug auf den Gewindebolzen feststehenden Abschnitts 310 kommt und dadurch zu einer Sicherung durch das Kontermutterprinzip oder durch ein Abknicken, oder zu einem Abreißen des Gewindebolzens. Im Falle eines Abknickens kann beispielsweise der den zweiten Abschnitt 316 aufnehmende hülsenartige Fortsatz des ersten Abschnitts 310 aufbiegen oder aufbrechen, so dass der zweite Abschnitt 316 zusammen mit dem Gewindebolzen abknicken kann.

Die dritte Anlagefläche 332 des ersten Abschnitts 310 schließt mit der ersten Längsachse 310 einen rechten Winkel ein, wohingegen die zweite Anlagefläche 334 des zweiten Abschnitts 316 mit der zweiten Längsachse 318, die im dargestellten Ausgangszustand mit der ersten Längsachse 310 zu einer gemeinsamen Längsachse 330 zusammenfällt, einen Winkel von weniger als 90° einschließt, beispielsweise zwischen 75 und 85°.

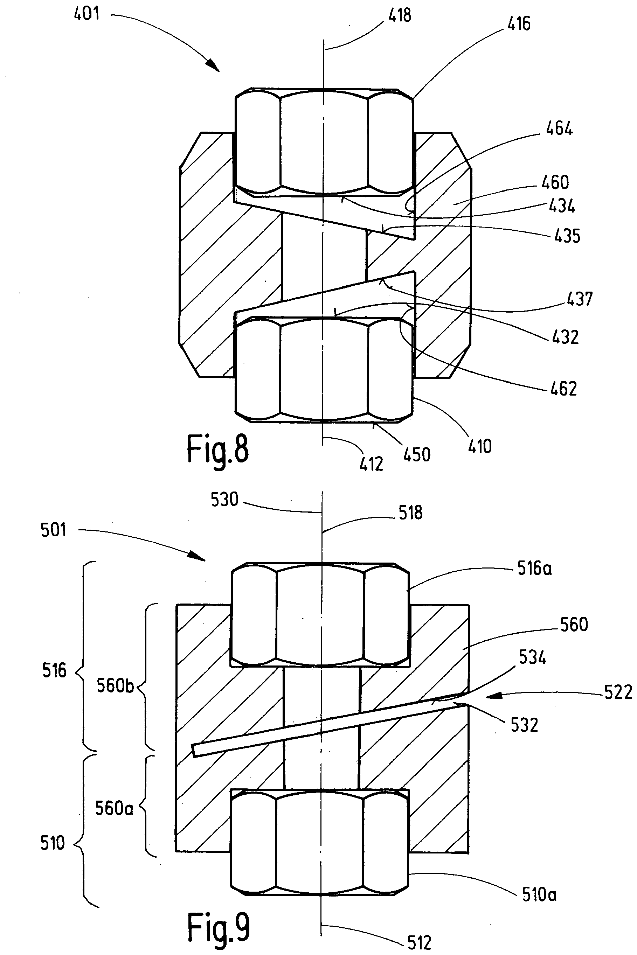

Die Fig. 8 zeigt ein fünftes Ausführungsbeispiel einer erfindungsgemäßen Schraubenmutter 401. Dabei sind der erste Abschnitt 410 und der zweite Abschnitt 416 jeweils durch eine Standardmutter gebildet, insbesondere jeweils durch eine Außensechskantmutter, die formschlüssig in Aufnahmeöffnungen 462, 464 eines Aufnahmekörpers 460 eingesetzt sind und dadurch drehfest miteinander verbunden sind. Die Schraubenmutter 401 kann in dem dargestellten Ausgangszustand auf einen Gewindebolzen aufgeschraubt werden, bis beispielsweise der erste Abschnitt 410 mit der ersten Anlagefläche 450 in Anlage an ein Gegenlager kommt. Bei einem anschließenden Weiterdrehen der Schraubenmutter 401, beispielsweise durch einen Werkzeugangriff an dem zweiten Abschnitt 416, wird bei einem vorgebbaren Drehmoment die drehfeste Verbindung zwischen dem ersten Abschnitt 410 und dem zweiten Abschnitt 416 aufgehoben, beispielsweise indem der Aufnahmekörper 460 sich im Bereich der Aufnahmeöffnungen 462, 464 für den ersten bzw. zweiten Abschnitt 410, 416 verformt. Ob die drehfeste Verbindung im Bereich des ersten Abschnitts 410 und/oder im Bereich des zweiten Abschnitts 416 aufgehoben wird, kann durch die geometrische Ausgestaltung der Aufnahmeöffnungen 462, 464 und/oder durch deren Oberflächenbehandlung vorbestimmt werden.

Die Aufnahmeöffnung 464 für den zweiten Abschnitt 416 bildet eine der zweiten Anlagefläche 434 des zweiten Abschnitts 416 zugewandte vierte Anlagefläche 435 aus und die Aufnahmeöffnung 462 für den ersten Abschnitt 410 bildet eine der dritten Anlagefläche 432 des ersten Abschnitts 410 zugewandte fünfte Anlagefläche 437 aus. Der Aufnahmekörper 460 bildet in dem dargestellten Ausführungsbeispiel den Abschnitt der Schraubenmutter 401, der den weiteren Abschnitt aufweist, an den der zweite Abschnitt 434 beim Weiterdrehen in Anlage ist oder jedenfalls kommt. Die vierte und fünfte Anlageflächen 435, 437 schließen mit der ersten Längsachse 412 des Innengewindes des ersten Abschnitts 410 bzw. der zweiten Längsachse 418 des Innengewindes des zweiten Abschnitts 416 einen Winkel von weniger als 90° ein, im dargestellten Ausführungsbeispiel von etwa 80°. Bei einem Weiterdrehen des zweiten Abschnitts 416 nach Aufhebung der drehfesten Verbindung zwischen dem ersten Abschnitt 410 und dem zweiten Abschnitt 416 kommt es daher zu einem Abknicken des zweiten Abschnitts 416 gegenüber dem ersten Abschnitt 410 und dadurch auch zu einem Abknicken des Gewindebolzens. Bei einem weiteren Drehen des zweiten Abschnitts 416 kann der Gewindebolzen auch abgerissen werden.

Die Fig. 9 zeigt ein sechstes Ausführungsbeispiel einer erfindungsgemäßen Schraubenmutter 501. Der erste Abschnitt 510 und der zweite Abschnitt 516 umfassen separat hergestellte Teile, beispielsweise Standardmuttern 516a, 510a, insbesondere Außensechskantmuttern. Der Aufnahmekörper 560 kann als zylindrisches Teil ausgebildet sein mit einem Einschnitt 522, der schräg verläuft zu der gemeinsamen Längsachse 530, die durch das Zusammenfallen der ersten Längsachse 512 des ersten Innengewindes des ersten Abschnittes 510 und der zweiten Längsachse 518 des zweiten Innengewindes des zweiten Abschnitts 516 gebildet ist. Der Winkel des Einschnitts 522 in Bezug auf die gemeinsame Längsachse 530 beträgt zwischen 75 und 85°. Die durch den Einschnitt 522 separierten Teile 560a, 560b des Aufnahmekörpers 560 sind dem ersten Abschnitt 510 bzw. dem zweiten Abschnitt 516 zuzurechnen. Die durch den Einschnitt 522 gebildete zweite Anlagefläche 534 des zweiten Abschnitts 516 und dritte Anlagefläche 532 des ersten Abschnitts 510 können erforderlichenfalls beschichtet sein, um das Reibverhalten beim Abknicken oder Abreißen in gewünschter Weise zu beeinflussen.

Vorteilhaft ist bei diesem Ausführungsbeispiel, dass Standardmuttern als Teile des ersten und zweiten Abschnitts 510, 516 eingesetzt werden können, und dass durch die Wahl der Tiefe, Breite und Position des Einschnitts 522 das Abknick- oder Abreißverhalten vorgegeben werden kann. Insbesondere können unterschiedliche Aufnahmekörper 560 mit unterschiedlich ausgestalteten Einschnitten 522 vorgehalten werden, in die lediglich form- oder reibschlüssig Standardmuttern als Teil des ersten und zweiten Abschnitts 510, 516 eingesetzt werden müssen, um anschließend eine Schraubenmutter 501 mit dem gewünschten Abknick- oder Abreißverhalten bereitzustellen. Der Aufnahmekörper 560 kann seinerseits eine Werkzeugangriffsfläche aufweisen, beispielsweise für ein vereinfachtes Lösen des ersten Abschnitts 510 der Schraubenmutter 501 nach einem Abreißen.

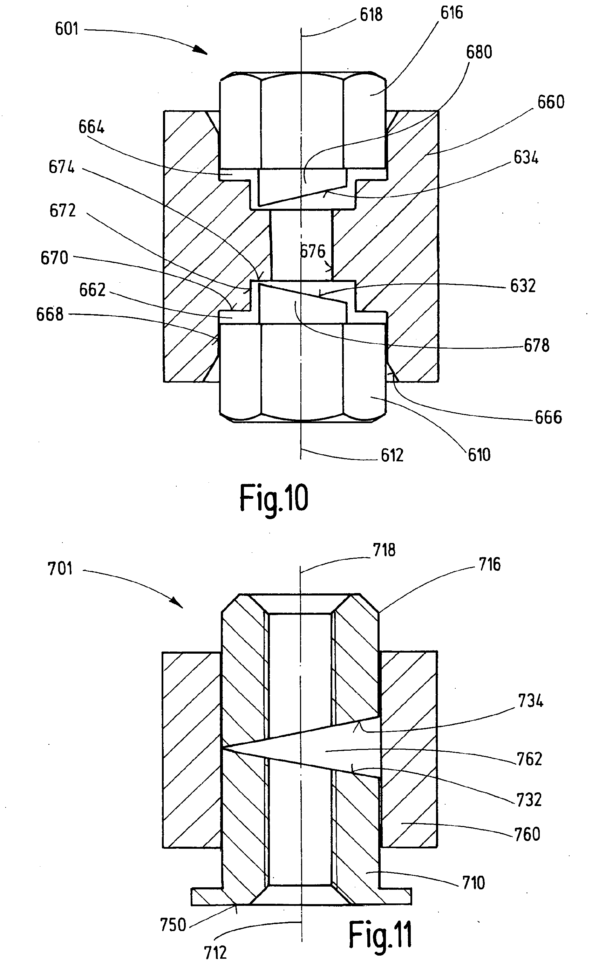

Die Fig. 10 zeigt ein siebtes Ausführungsbeispiel einer erfindungsgemäßen Schraubenmutter 601. Der Aufnahmekörper 660 bildet Aufnahmeöffnungen 662, 664 für die Aufnahme des ersten Abschnitts 610 bzw. des zweiten Abschnitts 616 auf, die in einem Ausgangszustand der Schraubenmutter 601 durch den Aufnahmekörper 660 drehfest miteinander verbunden sind. Die Aufnahmeöffnungen 662, 664 weiten sich zu ihrem freien Ende hin kegelförmig auf, um ein Schwenken des ersten Abschnitts 610 bzw. des zweiten Abschnitts 616 in der jeweiligen Aufnahmeöffnung 662, 664 zu ermöglichen.

An seinem dem zweiten Abschnitt 616 zugewandten Ende weist der erste Abschnitt 662 die dritte Anlagefläche 632 auf, die mit der ersten Längsachse 612 einen Winkel von weniger als 90° einschließt, im Ausführungsbeispiel von etwa 75°. In entsprechender Weise weist der zweite Abschnitt 616 an seinem dem ersten Abschnitt 610 zugewandten Ende eine zweite Anlagefläche 634 auf, die mit der zweiten Längsachse 618 ebenfalls einen Winkel von weniger als 90° einschließt.

Die Aufnahmeöffnungen 662, 664 weisen ausgehend von ihrem axialen freien Ende zunächst einen kegelförmigen Abschnitt 666 auf, an den ein erster zylindrischer Abschnitt 668 anschließt, mittels dem der erste Abschnitt 610 bzw. der zweite Abschnitt 616 form- oder reibschlüssig aufgenommen wird. Unter Bildung eines ersten Absatzes 670 schließt sich ein zweiter zylindrischer Abschnitt 672 an, der für die Aufnahme eines zapfenartigen Fortsatzes 678 des ersten Abschnitts 610 bzw. 680 des zweiten Abschnitts 616 aufnimmt, an dessen axialer Endseite der jeweilige Abschnitt 610, 616 die plane Schrägfläche 632, 634 ausbildet. Alternativ kann das freie Ende des zapfenartigen Fortsatzes 678, 680 des ersten und/oder zweiten Abschnitts 610, 616 auch rechtwinklig zur Längsachse 612, 618 ausgerichtet sein. Die Stufenbohrung in dem Aufnahmekörper 660 geht anschließend unter Bildung eines zweiten Absatzes 674 in einen dritten zylindrischen Abschnitt 676 über. Die Abschnitte 610, 616 sind als Gleichteile ausgebildet. Der Aufnahmekörper 660 ist spiegelsymmetrisch zu einer Mittelebene. Der Verformungskörper 660 kann eine Werkzeugangriffsfläche aufweisen, insbesondere einen Außenkant oder Außensechskant.

Die Fig. 11 zeigt ein achtes Ausführungsbeispiel einer erfindungsgemäßen Schraubenmutter 701. Der erste und zweite Abschnitt 710, 716 sind im dargestellten Ausgangszustand durch einen Aufnahmekörper 760 drehfest miteinander verbunden. Die drehfeste Verbindung kann durch einen Formschluss oder Reibschluss bereitgestellt werden. Die Aufnahmeöffnung 762 kann durch eine durchgehend zylindrische Bohrung in dem Aufnahmekörper 760 hergestellt sein, wobei der Querschnitt der Bohrung an die Außenkontur des ersten und zweiten Abschnitts 710, 716 angepasst ist, insbesondere auch sechseckig ist. Der erste Abschnitt 710 und der zweite Abschnitt 716 können auch als Gleichteile ausgebildet sein, insbesondere die Form des ersten Abschnitts 710 aufweisen.

Der erste Abschnitt 710 weist eine Bohrung mit einem Innengewinde entlang der ersten Längsachse 712 auf. Die an die Trennstelle zum zweiten Abschnitt 716 angrenzende dritte Anlagefläche 732 ist plan und schließt mit der Längsachse 712 einen Winkel von weniger als 90° ein, insbesondere zwischen 80 und 85°. Das gilt auch für die an die Trennstelle angrenzende zweite Anlagefläche 734 des zweiten Abschnitts 716, die ihrerseits mit der zweiten Längsachse 718 einen Winkel von weniger als 90° einschließt. Alternativ hierzu können die zweite und dritte Anlagefläche 732, 734 auch durch einen zapfenartigen Vorsprung gebildet sein, entsprechend dem in der Fig. 10 dargestellten Ausführungsbeispiel. Dabei kann das freie Ende des zapfenartigen Fortsatzes 678, 680 des ersten und/oder zweiten Abschnitts 610, 616 auch rechtwinklig zur Längsachse 612, 618 ausgerichtet sein.

Nach dem Aufschrauben der Schraubenmutter 701 auf einen Gewindebolzen bis zur Anlage der ersten Anlagefläche 750 des ersten Abschnitts 710 an einem Widerlager kommt es bei einem Weiterdrehen des zweiten Abschnitts 716 zu einem Aufheben der drehfesten Verbindung zwischen den Abschnitten 710, 716. Bei einem Weiterdrehen kommt es zu einem Abknicken des zweiten Abschnitts 716 gegenüber dem ersten Abschnitt 710 und gegebenenfalls auch zu einem Abreißen des Gewindebolzens. Der erste Abschnitt 710 weist an seinem dem Widerlager zugewandten Ende eine flanschartige Verbreiterung auf, so dass der sich dort einstellende effektive Reibradius größer ist als der Reibradius zwischen dem ersten und zweiten Abschnitt 710, 716.

## Patentansprüche

1. Schraubenmutter (1) aufweisend einen ersten Abschnitt (10) mit einem sich entlang einer ersten Längsachse (12) erstreckenden ersten Innengewinde (14), und weiterhin aufweisend einen zweiten Abschnitt (16) mit einem sich entlang einer zweiten Längsachse (18) erstreckenden zweiten Innengewinde (20), wobei in einem Ausgangszustand der Schraubenmutter (1) die erste Längsachse (12) und die zweite Längsachse (18) zu einer gemeinsamen Längsachse (30) zusammenfallen und die Schraubenmutter (1) auf einen Gewindebolzen aufschraubbar ist bis der erste Abschnitt (10) mit einer ersten Anlagefläche (50) in Anlage an ein Widerlager kommt, und wobei die drehfeste Verbindung zwischen dem ersten Abschnitt (10) und dem zweiten Abschnitt (16) durch Überschreiten eines vorgebbaren Anzugsdrehmoments aufhebbar ist und bei einem Weiterdrehen durch eine Relativbewegung der zweite Abschnitt (16) mit einer zweiten Anlagefläche (34) in Anlage an einer dritte Anlagefläche (32) des ersten Abschnitts (10) oder an einer weiteren Anlagefläche eines weiteren Abschnitts der Schraubenmutter (1) ist, **dadurch gekennzeichnet, dass** die zweite Anlagefläche (34) des zweiten Abschnitts (16) und die dritte Anlagefläche (32) des ersten Abschnitts (10) oder die weitere Anlagefläche des weiteren Abschnitts geometrisch und die jeweiligen Abschnitte (10, 16) werkstoffmäßig derart aufeinander abgestimmt sind, dass bei einem Weiterdrehen des zweiten Abschnitts (16) ein durch die auftretende Reibung auf den zweiten Abschnitt (16) wirkendes Reibdrehmoment geringer ist als das für ein Abknicken oder Abreißen des Gewindebolzens erforderliche Drehmoment, so dass durch ein Weiterdrehen der Gewindebolzen abknickbar und/ oder abreißbar ist, bevor es zu einer Bewegungskopplung des ersten Abschnitts (10) an den zweiten Abschnitt (16) kommt.

2. Schraubenmutter (1) nach Anspruch 1, **dadurch gekennzeichnet, dass** die weitere Anlagefläche des Abschnitts durch eine dritte Anlagefläche (32) des ersten Abschnitts (10) gebildet ist.

3. Schraubenmutter (1) nach einem der vorangehenden Ansprüche, **dadurch gekennzeichnet, dass** die weitere Anlagefläche des Abschnitts durch eine vierte Anlagefläche (435) eines weiteren Abschnitts gebildet ist.

4. Schraubenmutter (1) nach einem der vorangehenden Ansprüche, **dadurch gekennzeichnet, dass** die weitere Anlagefläche des Abschnitts durch ein Einlegeteil gebildet ist.

5. Schraubenmutter (1) nach einem der vorangehenden Ansprüche, **dadurch gekennzeichnet, dass** das Abknicken oder Abreißen des Gewindebolzens im Bereich des Übergangs vom ersten Abschnitt (10) zum zweiten Abschnitt (16) erfolgt.

6. Schraubenmutter (1) nach einem der vorangehenden Ansprüche, **dadurch gekennzeichnet, dass** die zweite Anlagefläche (34) des zweiten Abschnitts (16) und die weitere Anlagefläche des Abschnitts mindestens abschnittsweise plan sind.

7. Schraubenmutter (1) nach Anspruch 6, **dadurch gekennzeichnet, dass** die plane Fläche mit der gemeinsamen Längsachse (30) im Ausgangszustand der Schraubenmutter (1) einen Winkel von weniger als 90° einschließt.

8. Schraubenmutter (1) nach Anspruch 7, **dadurch gekennzeichnet, dass** der Winkel weniger als 88° beträgt, insbesondere weniger als 86°, und vorzugsweise zwischen 75° und 85° beträgt.

9. Schraubenmutter (1) nach einem der vorangehenden Ansprüche, **dadurch gekennzeichnet, dass** der erste Abschnitt (10) und der zweite Abschnitt (16) in einem Ausgangszustand der Schraubenmutter (1) einstückig ausgebildet sind.

10. Schraubenmutter (1) nach Anspruch 9, **dadurch gekennzeichnet, dass** die zweite Anlagefläche (34) des zweiten Abschnitts (16) und die weitere Anlagefläche des Abschnitts durch einen Einschnitt (22) in den ersten Abschnitt (10) gebildet sind, oder durch einen Einschnitt (22) in den zweiten Abschnitt (16) gebildet ist, oder durch einen Einschnitt (22) in einen Übergangsbereich zwischen dem ersten Abschnitt (10) und dem zweiten Abschnitt (16) gebildet ist.

11. Schraubenmutter (1) nach einem der vorangehenden Ansprüche, **dadurch gekennzeichnet, dass** der erste Abschnitt (10) und der zweite Abschnitt (16) der Schraubenmutter (1) als separate Teile ausgebildet sind.

12. Schraubenmutter (1) nach einem der vorangehenden Ansprüche, **dadurch gekennzeichnet, dass** in einem Ausgangszustand der Schraubenmutter (1) der erste Abschnitt (10) und der zweite Abschnitt (16) an einer Verbindungsstelle unmittelbar drehfest miteinander verbunden sind oder mittelbar über ein Verbindungselement drehfest miteinander verbunden sind.

13. Schraubenmutter (1) nach Anspruch 12, **dadurch gekennzeichnet, dass** der erste Abschnitt (10) und der zweite Abschnitt (16) im Ausgangszustand der Schraubenmutter (1) formschlüssig oder reibschlüssig miteinander verbunden sind, insbesondere miteinander verschraubt oder verklemmt sind.

14. Schraubenmutter (1) nach einem der vorangehenden Ansprüche, **dadurch gekennzeichnet, dass** der erste Abschnitt (10) und/oder der zweite Abschnitt (16) durch eine Standardmutter gebildet ist, insbesondere durch eine Außensechskantmutter, und dass der erste Abschnitt (10) und der zweite Abschnitt (16) im Ausgangszustand der Schraubenmutter (1) durch einen separaten Verbindungsabschnitt der Schraubenmutter (1), insbesondere durch einen den ersten Abschnitt (10) und/oder den zweiten Abschnitt (16) aufnehmenden Aufnahmekörper (460, 560 660, 760), drehfest miteinander verbunden sind.

15. Schraubenmutter (1) nach einem der vorangehenden Ansprüche, **dadurch gekennzeichnet, dass** die zweite Anlagefläche (34) des zweiten Abschnitts (16) oder die weitere Anlagefläche des Abschnitts eine Beschichtung mit einem Werkstoff aufweist, der einen von dem Werkstoff des zugehörigen Abschnitts abweichenden Reibungskoeffizienten aufweist.

## Claims

1. A nut (1) having a first section (10) with a first inner thread (14) extending along a first longitudinal axis (12), and furthermore having a second section (16) with a second inner thread (20) extending along a second longitudinal axis (18) wherein, in a starting state of the nut (1), the first longitudinal axis (12) and the second longitudinal axis (18) coincide to form a common longitudinal axis (30) and the nut (1) can be screwed onto a threaded bolt until the first section (10) with a first bearing surface (50) comes to bear with an abutment, and wherein the rotationally-fixed connection between the first section (10) and the second section (16) can be cancelled out by exceeding a predeterminable tightening torque and, upon further rotation, the second section (16) with a second bearing surface (34) comes to bear with a third bearing surface (32) of the first section (10) or a further bearing surface of a further section of the nut (1), because of relative movement, **characterised in that** the second bearing surface (34) of the second section (16) and the third bearing surface (32) of the first section (10) or the further bearing surface of the further section are aligned to each other geometrically and the respective sections (10, 16) are aligned to each other in terms of materials such that, upon a further rotation of the second section (16), a friction torque acting on the second section (16), which occurs due to friction, is lower than the torque required for breaking off or snapping off the threaded bolt, with the result that the threaded bolt can be broken off or snapped off by further rotation before the first section (10) is motion-coupled to the second section (16).

2. The nut (1) according to claim 1, **characterised in that** the further bearing surface of the section is formed by a third bearing surface (32) of the first section (10).

3. The nut (1) according to one of the preceding claims, **characterised in that** the further bearing surface of the section is formed by a fourth bearing surface (435) of a further section.

4. The nut (1) according to one of the preceding claims, **characterised in that** the further bearing surface of the section is formed by an insert.

5. The nut (1) according to one of the preceding claims, **characterised in that** threaded bolt is broken off or snapped off in the region of the transition from the first section (10) to the second section (16).

6. The nut (1) according to one of the preceding claims, **characterised in that** the second bearing surface (34) of the second section (16) and the further bearing surface of the section are at least partially planar.

7. The nut (1) according to claim 6, **characterised in that** the planar surface forms an angle of less than 90° with the common longitudinal axis (30) in the starting state of the nut (1).

8. The nut (1) according to claim 7, **characterised in that** the angle is less than 88°, in particular less than 86°, and preferably between 75° and 85°.

9. The nut (1) according to one of the preceding claims, **characterised in that** the first section (10) and the second section (16) are designed in one piece in a starting state of the nut (1).

10. The nut (1) according to claim 9, **characterised in that** the second bearing surface (34) of the second section (16) and the further bearing surface of the section are formed by an incision (22) in the first section (10), or by an incision (22) in the second section (16), or by an incision (22) in a transition region between the first section (10) and the second section (16).

11. The nut (1) according to one of the preceding claims, **characterised in that** the first section (10) and the second section (16) of the nut (1) are formed as separate parts.

12. The nut (1) according to one of the preceding claims, **characterised in that**, in a starting state of the nut (1), the first section (10) and the second section (16) are connected to one another directly in rotationally-fixed manner at a connection point, or connected to one another indirectly in rotationally-fixed manner via a connecting element.

13. The nut (1) according to claim 12, **characterised in that**, in the starting state of the nut (1), the first section (10) and the second section (16) are connected to one another in form or friction fit, in particular are screwed or clamped together.

14. The nut (1) according to one of the preceding claims, **characterised in that** the first section (10) and/or the second section (16) are formed by a regular nut, in particular by an external hexagonal nut, and that, in the starting state of the nut (1), the first section (10) and the second section (16) are connected to one another in rotationally-fixed manner by a separate connecting section of the nut (1), in particular by a receiving body (460, 560, 660, 760) which receives the first section (10) and/or the second section (16).

15. The nut (1) according to one of the preceding claims, **characterised in that** the second bearing surface (34) of the second section (16) or the further bearing surface of the section has a coating with a material which has a friction coefficient which is different from that of the material of the respective section.

## Revendications

1. Ecrou (1) comportant une première partie (10), ayant un premier taraudage (14), s'étendant suivant un premier axe (12) longitudinal et comportant en outre une deuxième partie (16), ayant un deuxième taraudage (20), s'étendant suivant un deuxième axe (18) longitudinal , dans lequel, dans, un état initial de l'écrou (1), le premier axe (12) longitudinal et le deuxième axe (18) longitudinal coïncident en un axe (30) longitudinal commun et l'écrou (1) peut se visser sur un boulon fileté jusqu'à ce que la première partie (10) vienne, par une première surface (50) de contact, en contact avec une butée et dans lequel la liaison solidaire en rotation, entre la première partie (10) et la deuxième partie (16), peut être levée par dépassement d'un couple de serrage pouvant être donné à l'avance et, lorsque l'on continue à faire tourner, par un mouvement relatif de la deuxième partie (16), est, par une deuxième surface (34) de contact, en contact avec une troisième surface (32) de contact de la première partie (10) ou une autre surface de contact d'une autre partie de l'écrou (1), **caractérisé en ce que** la deuxième surface (34) de contact de la deuxième partie (16) et la troisième surface (32) de contact de la première partie (10) ou l'autre surface de contact de l'autre partie sont adaptées l'une à l'autre géométriquement et les parties (10, 16) respectives sont adaptées l'une à l'autre du point de vue du matériau, de manière à ce que, lorsque l'on continue à faire tourner la deuxième partie (16), un couple de frottement, s'appliquant à la deuxième partie (16) par le frottement qui apparaît, soit plus petit que le couple nécessaire pour un flambage ou une rupture du boulon fileté, de sorte que, en continuant à tourner, le boulon fileté peut subir un flambage ou être rompu avant qu'il ne se produise un couplage en déplacement de la première partie (10) à la deuxième partie (16).

2. Ecrou (1) suivant la revendication 1, **caractérisé en ce que** l'autre surface de contact de la partie est formée par une troisième surface (32) de contact de la première partie (10).

3. Ecrou (1) suivant l'une des revendications précédentes, **caractérisé en ce que** l'autre surface de contact de la partie est formée par une quatrième surface (435) de contact d'une autre partie.

4. Ecrou (1) suivant l'une des revendications précédentes, **caractérisé en ce que** l'autre surface de contact de la partie est formée par une pièce d'insertion.

5. Ecrou (1) suivant l'une des revendications précédentes, **caractérisé en ce que** le flambage ou la rupture du boulon fileté a lieu dans la région de la transition de la première partie (10) à la deuxième partie (16).

6. Ecrou (1) suivant l'une des revendications précédentes, **caractérisé en ce que** la deuxième surface (34) de contact de la deuxième partie (16) et l'autre surface de contact de la partie sont planes, au moins par endroit.

7. Ecrou (1) suivant la revendication 6, **caractérisé en ce que** la surface plane fait, avec l'axe (30) longitudinal commun dans l'état initial de l'écrou (1), un angle de moins de 90°.

8. Ecrou (1) suivant la revendication 7, **caractérisé en ce que** l'angle est plus petit que 88°, notamment plus petit que 86° et de préférence compris entre 75° et 85°.

9. Ecrou (1) suivant l'une des revendications précédentes, **caractérisé en ce que** la première partie (10) et la deuxième partie (16) sont d'une seule pièce dans un état initial de l'écrou (1).

10. Ecrou (1) suivant la revendication 9, **caractérisé en ce que** la deuxième surface (34) de contact de la deuxième partie (16) et l'autre surface de contact de la partie sont formées par une entaille (22) dans la première partie (10) ou sont formées par une entaille (22) dans la deuxième partie (16) ou sont formées par une entaille (22) dans une région de transition entre la première partie (10) et la deuxième partie (16).

11. Ecrou (1) suivant l'une des revendications précédentes, **caractérisé en ce que** la première partie (10) et la deuxième partie (16) de l'écrou (1) sont constituées sous la forme de pièces distinctes.

12. Ecrou (1) suivant l'une des revendications précédentes, **caractérisé en ce que**, dans un état initial de l'écrou (1), la première partie (10) et la deuxième partie (16) sont solidarisées en rotation directement en un point de liaison ou sont solidarisées en rotation indirectement par un élément de liaison.

13. Ecrou (1) suivant la revendication 12, **caractérisé en ce que** la première partie (10) et la deuxième partie (16) sont, dans l'état initial de l'écrou (1), solidarisées par complémentarité de forme ou par frottement, en étant notamment vissées ou serrées ensemble.

14. Ecrou (1) suivant l'une des revendications précédentes, **caractérisé en ce que** la première partie (10) et/ou la deuxième partie (16) sont formées par un écrou standard, notamment par un écrou à six pans extérieurs, et **en ce que** la première partie (10) et la deuxième parties (16) sont, dans l'état initial de l'écrou (1), solidarisées en rotation par une partie de liaison distincte de l'écrou (1), notamment par un corps (460, 560, 660, 760) de réception recevant la première partie (10) et/ou la deuxième partie (16).

15. Ecrou (1) suivant l'une des revendications précédentes, **caractérisé en ce que** la deuxième surface (34) de contact de la deuxième partie (16), ou l'autre surface de contact de la partie, a un revêtement en un matériau, qui a un coefficient de frottement s'écartant de celui du matériau de la partie associée.
